# EUROPEAN PATENT SPECIFICATION

(11) **EP 0 393 755 B1**
(45) Date of publication and mention of the grant of the patent: **16.03.1994**
(21) Application number: 90200892.9
(22) Date of filing: 12.04.1990
(51) Int. Cl.: C03C 25/02, G02B 6/44

(54) **Method of manufacturing an optical fibre having a hermetic coating**
Verfahren zum Herstellen einer optischen Faser mit einer hermetisch abschliessenden Bedeckung
Procédé de fabrication d'une fibre optique munie d'un revêtement hermétique

(30) Priority: 19.04.1989 NL 8900977
(43) Date of publication of application: 24.10.1990
(73) Proprietor: Philips Electronics N.V., 5621 BA Eindhoven (NL)
(72) Inventor: Jochem, Cornelis Marinus Gerrit, NL-5656 AA Eindhoven (NL)
(74) Representative: Pennings, Johannes

(56) References cited:
- EP-A- 0 308 143
- EP-A- 0 353 934
- EP-A- 0 371 628
- EP-A- 0 371 826
- EP-A- 0 379 926
- DE-B- 1 646 924
- US-A- 3 125 428
- CHEMICAL ABSTRACTS, vol. 107, no. 4, 27 July 1987, Columbus, Ohio, US; abstract no. 27357M, page 252, & JP-A-62083339
- Optical Fiber Communication Conference, 25-28 January 1988, Technical Digest Series, vol.1, Opt. Soc. of America (Washington DC, US) K.E.LU : "Hermetically Coated Optical Fibers"
- AMERICAN CERAMIC SOCIETY BULLETIN, vol. 66, no. 2, February 1987, COLUMBUS US pages 359 - 362; D.A.CONDIT ET AL.: 'Low Density Composites of Oriented Carbon on Fused Quartz Wool or Reticulated Vitreous Carbon.'

## Description

The invention relates to a method of manufacturing an optical fibre having a hermetic coating of amorphous carbon, in which the optical fibre is formed by drawing from a preform after which it is immediately brought into contact with a carbon-containing gas in a reactor at high temperature.

Optical fibre is to be understood to mean herein, a fibre of glass or quartz glass as used in, for example, telecommunications. To preclude mechanical damage, such fibres are generally covered with a synthetic resin coating which comprises various layers. When the fibres are used in an aggressive environment it is desirable to use an additional hermetic coating. The purpose hereof is to prevent both water and hydrogen from contacting the glass fibre. It is known that for this reason a first layer of carbon is directly applied to the glass fibre. This first layer, and the first synthetic resin coating, are applied immediately after the glass fibre has been drawn, i.e. before the fibre is led over a pulley or stored.

A method of providing a hermetic coating of amorphous carbon on a glass fibre is described in PCT Patent Application W0 87/05831, with an additional description by the inventors S. Ray Chaudhuri and P.C. Schultz being published in Proceedings of SPIE, 717, pages 27 to 32 (1986). According to said method, a fibre of quartz glass is drawn from a preform in a drawing furnace. As is customary in this technique, the thickness of the fibre is subsequently measured and the result is used to control the drawing process. Said measurement is usually carried out by means of a moving beam of laser light and one or more detectors. To carry out the measurement, the fibre is in air over a distance from 10 to 15 cm and cools considerably. By means of chemical deposition from the vapour phase (CVD) a layer of amorphous carbon is deposited in e heated reactor at a temperature from 1000 to 1,100°C. Butane having a flow rate from 50 to 100 cm³/min. is used as the carbon-containing gas with a fibre transport rate of 20 m/min. The thickness of the carbon layer formed is 20 to 25 nm and it is determined that the layer is not completely hermetical. Further layer of titanium carbide is applied to the carbon layer after which the fibre is provided with a synthetic resin coating in a customary manner.

The known method has the disadvantage that carbon deposition does not only take place on the glass fibre but also on the wall of the furnace. This causes the furnace to become clogged. Moreover, carbon is formed in excess, so that also more by-products are formed, in particular hydrogen, whereas one of the objects of the use of a hermetical coating comprising amorphous carbon is to arrest hydrogen.

It is an object of the invention, inter alia, to provide a method of coating an optical fibre with a carbon layer at a high velocity by means of a decomposition reaction, in such a manner that the wall of the furnace remains clean. A further object is to provide an amorphous carbon layer, so that no diffusion along the grain boundaries can take place. The carbon layer must not have a crystalline or diamond-like structure. For this reason, a plasma deposition method as described in United States Patent Specification US 4402993 and an immersion method using a colloidal suspension as described in United States Patent Specification US 4183621 are considered unsuitable for the intended purpose. Moreover, such methods are too slow to be used at the customary drawing rates of at least 5 meters per second. A particular object of the invention is to provide a carbon layer of such quality that even diffusion of hydrogen towards the glass fibre is strongly suppressed. Hydrogen may be formed in cables which are exposed to moisture as a result of a reaction of water with metals used in cable sheaths. The presence of hydrogen in the quartz glass fibre leads to a strong increase of the attenuation of the optical signal.

According to the invention, these objects are achieved by a method as described in the opening paragraph, which is characterized in that the fibre is in contact with the carbon-containing gas at a location where the temperature of the fibre is 1,100 to 1,500°C, in that the temperature of the wall of the reactor is below 800°C, and in that the carbon-containing gas comprises an inert carrier gas whose coefficient of heat conductivity is less than 0.04 J/m.s.°C at 27°C and 1 atmosphere.

The high temperature of the fibre immediately after it has been drawn is used to initiate the decomposition reaction. The reactor serves to supply the carbon-containing gas and to preclude cooling of the fibre, but it is not necessary to supply additional heat via the furnace, which is an additional advantage of the method according to the invention. By virtue of the relatively low wall temperature of the reactor almost no carbon is deposited on the wall. To preclude excessive cooling of the fibre before it is introduced into the reactor it is efficacious to measure the diameter of the glass fibre at the location where the glass fibre leaves the deposition reactor.

In French Patent Application FR 2493302 a description is given of a method of applying a carbon layer on a glass fibre by using the high temperature of the fibre, however, the carbon-containing gas is supplied to or in the vicinity of the location where the preform is heated to enable the fibre to be drawn. The majority of the carbon deposition takes place in the hottest spot near the conical portion of the preform at a temperature of approximately 2000°C. Consequently, a crystalline layer of pyrographite is formed. Another disadvantage is that at said location the fibre diameter has not yet reached the ultimate smallest value, so that the carbon layer formed may be subject to cracking.

It is desirable to preclude cooling of the glass fibre in the reactor to the extent possible in order to achieve that a sufficient quantity of amorphous carbon can be deposited on the glass fibre at a high fibre-transport rate and a limited length of the reactor. For this reason, it is necessary that the carbon-containing gas comprises an inert carrier gas having a coefficient of heat conductivity smaller than 0.04 J/m.s.°C at 27°C. The following Table lists the coefficients of heat conductivity in J/m.s.°C at 27°C and 1 atmosphere of a number of inert gases and carbon compounds:
- nitrogen: 0.026
- argon: 0.018
- carbon dioxide: 0.017
- methane: 0.034
- ethane: 0.021
- propane: 0.018
- n-butane: 0.016
- i-butane: 0.016

Carbon compounds which can suitably be used to form carbon by means of pyrolysis are, for example, benzene, acetylene and acetone. In a preferred embodiment of the method according to the invention, the carbon-containing gas comprises one or more alkanes having 1 to 6 carbon atoms. Mixtures of butane with, for example, butene and/or butadiene can also suitably be used in the method according to the invention.

In order to attain a simple transport and a simple control of the supply, it is efficacious to use carbon compounds which are gaseous at room temperature. It is useful to select compounds which provide many carbon atoms in a given gas volume. In this respect, butane and other carbon compounds having four carbon atoms are a suitable compromise, also because of their poor heat conduction.

If desirable, the carbon layer may be doped in order to adapt the properties of the relevant layer to various needs, for example, it may be doped with a few percent of boron by adding borane to the carbon-containing gas.

The invention will be explained by means of exemplary embodiments and with reference to the accompanying drawing, in which
Figure 1 is a diagrammatic representation of an arrangement which can suitably be used in the method according to the invention, and in which
Figure 2 shows the temperature of the glass fibre at different locations and as a function of the fibre-transport rate.

### Example 1.

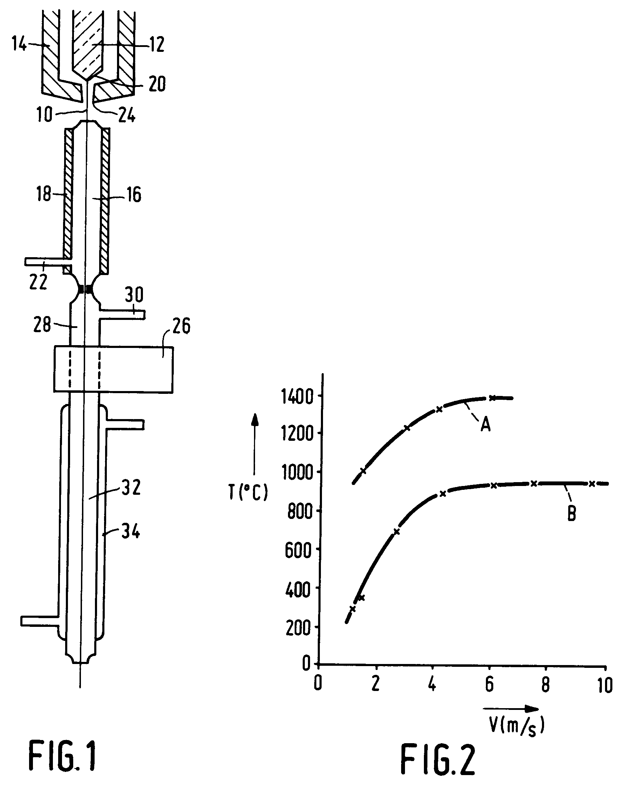

A glass fibre 10 is formed in known manner by drawing from a preform 12 in a furnace 14, see Figure 1. Glass fibre is to be understood to mean herein a fibre of glass or quartz glass. The fibre comprises a core glass and a cladding glass having different refractive indices (not shown in Figure 1). It is alternatively possible to use a fibre whose core is composed of glass having a graded refractive index from the inside outwards. The fibre shown by way of example in Figure 1 has a circular cross section with a diameter of 125 µm.

Immediately after the glass fibre 10 has been drawn it is led through a carbon deposition reactor 16 which may comprise an insulated wall 18 or a heating device which is not shown in Figure 1, in order to preclude that the glass fibre cools too rapidly. According to the invention, the wall temperature of the reactor 16 is maximally 800°C. The distance between the bottom side of the drawing furnace 24 and the reactor 16 is approximately 5 cm, the length of the reactor is 90 cm. The distance from the conical portion of the preform 20 to the bottom side of the drawing furnace 24 is approximately 16 cm. The reactor comprises an inlet aperture 22 for the carbon-containing gas. It is advantageous to supply a hot carbon-containing gas because this permits the use of a deposition reactor having a smaller length than in the case that a gas is used which has not been heated previously.

Subsequently, the fibre is led through a diameter-measuring device 26 into a pipe 28 having an inlet aperture 30 for an inert gas, for example nitrogen, argon or helium, to preclude the burning of carbon. The glass fibre is cooled in a cooling pipe 32 comprising a water-cooled jacket 34. Subsequently, the glass fibre is provided with one or more coatings in a known manner, which are composed of, for example, UV-light curable synthetic resin compositions, by means of fibre-coating devices not shown in Figure 1; reference is made to, for example, United States Patent Specification US 4758447.

Figure 2 shows the temperature T of the glass fibre as a function of the fibre-transport rate v, at two different locations. Location A is at a distance of 5 cm from the drawing furnace, location B is at a distance of 25 cm, for example a diameter-measuring device possibly being arranged between the drawing furnace and location B. Figure 2 shows that when the fibre-transport rate is sufficiently high the fibre temperature at location A suffices (exceeds 1100°C) to obtain carbon deposition at a useful rate.

In this example a fibre-transport rate of 3.7 m/s is used. Argon with 9% n-butane is used as the carbon-containing gas, the supply rate being 2.5 l/min. A carbon layer is deposited in a quantity of 25 µg/m and a thickness of approximately 45 nm. The electric resistance of the carbon layer measured in the longitudinal direction of the glass fibre is 10 kΩ/cm.

To test the hermeticity of the carbon layer the fibre was subjected to a treatment in an autoclave. The glass fibre was stored for 100 hours in a hydrogen atmosphere at a pressure of 14 MPa and a temperature of 125°C. The increase of the optical attenuation was measured at wavelengths of light from 1100 to 1250 nm and was less than 0.05 dB/km. In a comparative test in which a glass fibre was used having a carbon layer which was half as thick (electric resistance 20 kΩ/cm) the increase of the attenuation was 20 dB/km at 1240 nm after the fibre had been stored only for 24 hours in a hydrogen atmosphere at a pressure of 14 MPa and a temperature of 125° C. In the case of a fibre which was not coated with carbon the transmission could no longer be measured after such a test.

### Example 2.

Fibres were manufactured according to the method described in the preceding example, the distance between the drawing furnace 24 and the beginning of the carbon deposition reactor 16 being varied from 4 to 12 cm. It was found that the quantity of carbon deposited decreases according as the distance to the conical portion increases. This can be attributed to the reduction in temperature as the distances increase. The decrease of the electric conductivity of the carbon layer is more than proportional to the quantity by weight of carbon, which indicates a reduced hermeticity of the carbon layer.

### Example 3.

Fibres were manufactured according to the method described in example 1, both argon and nitrogen being used as the carrier gas. At a fibre-transport rate of 2.6 m/s and a supply of butane of 0.27 l/min to 1 to 2.5 l/min of the carrier gas it was established that the quantity of carbon formed decreases slightly according as the quantities of carrier gas increase. When argon is used, the quantity of carbon which is deposited is approximately 5 to 10% greater than when nitrogen is used, which can be attributed to the smaller heat conductivity of argon and the higher temperature of the glass fibre when argon is used. The use of nitrogen or argon does not lead to a difference in electric conductivity or hermeticity of the carbon layer formed. However, when helium is used as the carrier gas hardly any carbon is deposited. In this case, the electric resistance is 8500 kΩ/cm instead of 10 kΩ/cm. This is brought about by the substantial heat conduction in helium. The coefficient of heat conductivity of helium is 0.151 J/m.s.°C at 27°C and 1 atmosphere.

### Example 4.

Fibres were manufactured according to the method described in example 3, the fibre-transport rate being 4 m/s and the gas supply 2.5 l/min., the butane content ranging from 4 to 20% by volume, argon and nitrogen being used as the carrier gases. The results are the same as in the preceding example. The quantity of carbon deposited largely depends on the butane content. In this manner, it becomes possible to accurately control the deposition process. The electric resistance of the layer deposited by using 4% by volume of butane was 20 kΩ/cm, and at 20% by volume of butane the electric resistance was 7 kΩ/cm.

### Example 5.

Fibres were manufactured according to the method described in example 1, the fibre-transport rate being varied from 2 to 9 m/s. The quantity of carbon-containing gas supplied, being argon with 25% by volume of butane, was 2.5 l/min. At low transport rates the fibre has cooled before it is introduced into the reactor such that the carbon deposition is small. At high transport rates the residence time of the fibre in the reactor is so short that also a small carbon deposition is attained which, however, is of high quality, i.e., the layer exhibits a high hermeticity. Under the conditions indicated, an optimum result was obtained at fibre-transport rates from 5 to 6 m/s.

### Example 6.

Fibres were manufactured according to the method described in example 1, the fibre diameter being varied from 120 to 130 µm. The fibre-transport rate was 3 to 4 m/s, the quantity of carbon-containing gas was 1.25 to 2.5 l/min. The carbon-containing gas was argon with 10 to 25% by volume of butane. Under all these different conditions it was found that an approximately 10% larger quantity of carbon was deposited on the thicker fibre. This was attributed to the larger heat content of the thicker fibre which, consequently, has a somewhat higher temperature for an extended period of time.

### Example 7.

Fibres were manufactured according to the method described in example 1, the wall temperature of the deposition reactor being varied from 600 to 900° C. The fibre-transport rate was 4 m/s, the quantity of carbon-containing gas was 2.5 l/min. The carbon-containing gas consisted of argon with 5 to 10% by volume of butane. When the wall temperature increases from 600 to 800°C the quantity of carbon deposited on the glass fibre increases slightly. At higher temperatures, however, the quantity of carbon on the glass fibre decreases substantially as a result of the deposition of carbon on the wall of the furnace. Owing to this the concentration of butane decreases and the quantity of hydrogen increases. The presence of hydrogen adversely affects the quality of the glass fibre and, moreover, leads to an increased heat conduction of the carbon-containing gas. The coefficient of heat conductivity of hydrogen is 0.187 J/m.s.°C at 27°C and 1 atmosphere.

### Example 8.

Fibres were manufactured according to the method described in example 1, n-butane or propane being used in the carbon-containing gas. The fibre-transport rate was 4.6 m/s, the quantity of carbon-containing gas was 2.5 l/min. The carbon-containing gas consisted of argon with 4 to 25% by volume of butane or propane. As a result of the larger quantity of carbon atoms per unit of volume of butane, the quantity of carbon formed under otherwise equal conditions is approximately 30% larger when butane is used.

## Claims

1. A method of manufacturing an optical fibre having a hermetic coating of amorphous carbon, in which the optical fibre is formed by drawing from a preform after which it is immediately brought into contact with a carbon-containing gas in a reactor at high temperature, characterized in that the fibre is in contact with the carbon-containing gas at a location where the temperature of the fibre is 1100 to 1500° C, in that the temperature of the wall of the reactor is below 800° C and in that the carbon-containing gas comprises an inert carrier gas whose coefficient of heat conductivity is less than 0.04 J/m.s.°C at 27°C and 1 atmosphere.

2. A method as claimed in Claim 1, characterized in that the carbon-containing gas comprises one or more alkanes with 1 to 6 carbon atoms.

3. A method as claimed in Claim 1, characterized in that the carbon-containing gas comprises one or more of the compounds butadiene, butene, n-butane and i-butane.

4. A method as claimed in any one of the Claims 1 up to and including 3, characterized in that the carbon layer is doped with boron.

## Patentansprüche

1. Verfahren zum Herstellen einer optischen Faser mit einer hermetisch abschließenden Bedeckung aus amorphem Kohlenstoff, wobei nach diesem Verfahren die optische Faser in einem Ziehvorgang aus einer Vorform gebildet und unmittelbar danach in einem Reaktor bei hoher Temperatur mit einem kohlenstoffhaltigen Gas in Kontakt gebracht wird, dadurch gekennzeichnet, daß die Faser mit dem kohlenstoffhaltigen Gas an einer solchen Stelle in Berührung ist, wo die Temperatur der Faser 1100 bis 1500°C beträgt, daß die Wand des Reaktors eine Temperatur aufweist von weniger als 800°C, und daß das kohlenstoffhaltige Gas ein inertes Trägergas aufweist, dessen Wärmeleitkoeffizient niedriger ist als 0,04 J/m.s. °C bei 27°C und 1 at.

2. Verfahren nach Anspruch 1, dadurch gekennzeichnet, daß das kohlenstoffhaltige Gas ein oder mehrere Alkane mit 1 bis 6 Kohlenstoffatomen aufweist.

3. Verfahren nach Anspruch 1, dadurch gekennzeichnet, daß das kohlenstoffhaltige Gas eine oder mehrere der Verbindungen Butadien, Buten, n-Butan und i-Butan aufweist.

4. Verfahren nach einem der Ansprüche 1 bis 3, dadurch gekennzeichnet, daß die Kohlenstoffschicht mit Bor dotiert ist.

## Revendications

1. Procédé de fabrication d'une fibre optique présentant un revêtement hermétique en carbone amorphe, suivant lequel la fibre optique est formée par étirage à partir d'une préforme pour être immédiatement mise en contact avec un gaz contenant du carbone dans un réacteur à haute température, caractérisé en ce que la fibre est en contact avec le gaz contenant du carbone dans une position où la température de la fibre est comprise entre 1100 et 1500°C, en ce que la température de la paroi du réacteur est inférieure à 800°C, et en ce que le gaz contenant du carbone comporte un gaz porteur inerte dont le coefficient de conductivité thermique est inférieur à 0,04 J/m.s. °C à 27°C et à 1 atmosphère.

2. Procédé selon la revendication 1, caractérisé en ce que le gaz contenant du carbone comporte un ou plusieurs alcanes renfermant 1 jusqu'à 6 atomes de carbone.

3. Procédé selon la revendication 1, caractérisé en ce que le gaz contenant du carbone comporte un ou plusieurs composés de butadiène, de butène, de n-butane et de i-butane.

4. Procédé selon l'une quelconque des revendications 1 à 3, caractérisé en ce que la couche de carbone est dopée de bore.
